# EUROPEAN PATENT SPECIFICATION

(11) **EP 3 035 306 B1**
(45) Date of publication and mention of the grant of the patent: **08.08.2018**
(21) Application number: 15198542.1
(22) Date of filing: 08.12.2015
(51) Int. Cl.: G08B 13/196

(54) **SYSTEM AND METHOD OF INTERACTIVE IMAGE AND VIDEO BASED CONTEXTUAL ALARM VIEWING**
SYSTEM UND VERFAHREN FÜR EIN INTERAKTIVES BILD UND VIDEOBASIERTE KONTEXTUELLE ALARMBETRACHTUNG
SYSTÈME ET PROCÉDÉ D'IMAGE INTERACTIVE ET VISUALISATION D'ALARME CONTEXTUELLE BASÉE SUR LA VIDÉO

(30) Priority: 16.12.2014 US 201414571589
(43) Date of publication of application: 22.06.2016
(73) Proprietor: Honeywell International Inc., Morris Plains, NJ 07950 (US)
(72) Inventor: MEGANATHAN, Deepak Sundar, Morris Plains, NJ 07950 (US); THOMAS, Manu, Morris Plains, NJ 07950 (US); DHAYALAN, Sivasanthanam, Morris Plains, NJ 07950 (US)
(74) Representative: Houghton, Mark Phillip

(56) References cited:
- US-A1- 2013 091 432
- US-A1- 2013 293 718

## Description

### FIELD

The application pertains to systems and methods of presenting primarily non-tabular multilevel images of alarms or events via a user friendly graphical user interface. More particularly, the application pertains to such systems and methods which provide a background contextual image which is overlaid, in part, by one or more semitransparent alarm or event indicating elements.

### BACKGROUND

Video surveillance systems are used in almost all the business sectors for security and surveillance purposes. Primary usage of these systems includes live monitoring, reviewing playback videos, and, event, alarm, bookmark and incident reviews. A recurring problem with these systems is that they are primarily list driven. Alarm and event lists are presented in a more or less static configuration and need further improvements.

Alarm lists make for difficult reading in that they often show a basic description about the alarm details, alarm device, time, and location. Most of the time these alarms will be listed in a tabular list format.

Further, most of the time these alarms will be linked with some video data, like "Motion detection on Camera 39". For this alarm, the user has to obtain the video from camera 39. Many known types of systems such as life safety, building automation and management systems, home automation, residential security systems for example, are integrated with a regional video system to provide visual alarm verification.

Existing alarm and event views gives more or less static information. There may be linkages to the other interfaces to provide for retrieving relevant video, but this information needs to be extracted from different interfaces or different subsystems. Problem is more applicable for video based mobile apps (CCTV) since the screen size is limited. Nowadays most of the residential security systems, connected home systems and residential home automation systems are controlled and monitored remotely though mobile devices such as smart phones and tablets.

In summary, in known systems there is no contextual view or info for the events to be reviewed (even before starting the video retrieval), For example in a scenario where a CCTV operator is looking for a person in red shirt who forcibly opened an access door to find the exact alarm and the video clip the operator needs to play the entire video clip when it has been found Relevant prior art may be found in US2013/0091432.

### SUMMARY OF THE PRESENT INVENTION

The present invention is defined by the appended claims.

### BRIEF DESCRIPTION OF THE DRAWINGS

Fig. 1 illustrates a block diagram of a system in accordance herewith;
Fig. 2 is an exemplary event or incident list;
Fig. 3 illustrates a multi layered context displaying interface screen; and
Fig. 4 is a second exemplary contextual presentation of event or incident information.

### DETAILED DESCRIPTION

While disclosed embodiments can take many different forms, specific embodiments thereof are shown in the drawings and will be described herein in detail with the understanding that the present disclosure is to be considered as an exemplification of the principles thereof as well as the best mode of practicing same, and is not intended to limit the application or claims to the specific embodiment illustrated. In one aspect, contextual alarm views are presented after the users review a list of events and alarms from the system, and select a type of event. The user interface presents a background screen that shows context information for the selected event or alarm.

Context information can include, a video snapshot image at alarm time, a video clip at alarm time or alarm location information, for example by presenting a 2D floor map or 3D Model or BIM. On an as needed basis a user or operator can start playing video directly from the alarm view.

Once the video starts playing the alarm video, other alarm lists can be suppressed. Each event type can be displayed with text and a semitransparent icon. Selected events can be highlighted by selecting or highlighting the respective icon. The event list can be navigated up and down by touch or by using a mouse (workstation or mobile device). Camera views can be selected based on the physical location of the alarmed device or detector which is in an alarm state. In the event of an alarm from a sub system like an invalid access card entry, the alarm can retrieve the logical video feed.

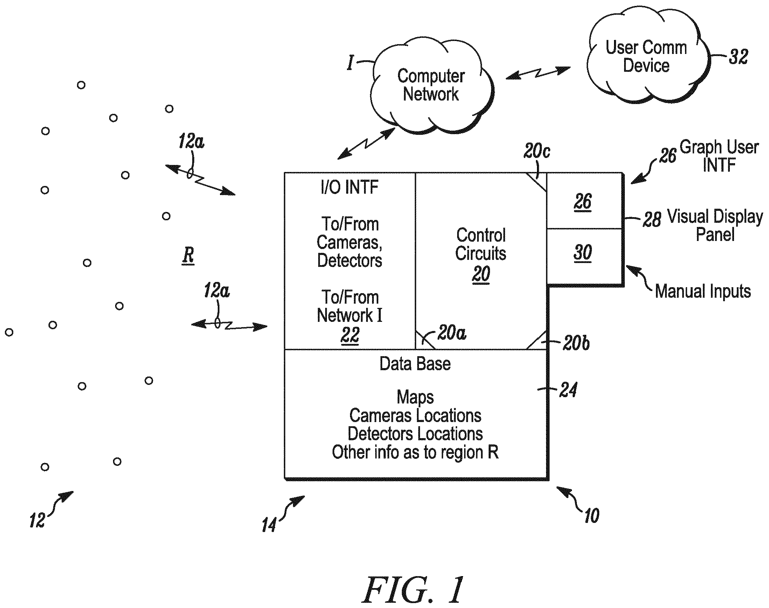

Fig. 1 illustrates a system 10 in accordance herewith. In one embodiment, system 10 implements a video surveillance system. A plurality of video cameras 12 is installed to monitor various aspects of a region R.

The members of the plurality 12 communicate via a wired or wireless medium, indicated at 12a, with a monitoring, or security station 14. Station 14 includes control circuits 20 which can be implemented, at least in part, with one or more programmable processors 20a, and software 20b executable by the processor(s) 20a.

An input/output interface 22 coupled to the control circuits 20 facilitates communications with members of the plurality 12. A data base 24 provides storage for various types of information including maps of the region R, information as to characteristics of and location of members of the plurality 12 which in addition to the video cameras, can also include various types of ambient condition detectors.

Station 14 also includes a graphical user interface 26, coupled to control circuits 20. Interface 26, which can be driven by software 20c and the processor(s) 20a can include a visual display panel 28. In addition, it can include manually operable communications elements 30. Elements 30 can include mouse-type devices, keyboards and touch screens.

Station 14, via the interface element 22 can also communicate wirelessly with a computer network, such as the internet I with a user's displaced communication device 32. The below described contextual screens can be readily presented on portable communications devices 32 such as smart phones, tablets or the like all without limitation.

Those of skill will understand that the detailed characteristics of the elements of the station 14 do not constitute limitations hereof, except as described herein. Variations of the components of the station 14 come within the spirit and scope hereof. The graphical user interface 26, as discussed below, can present to a user multi-level contextual displays driven by outputs from members of the plurality 12, and, choices made by the user.

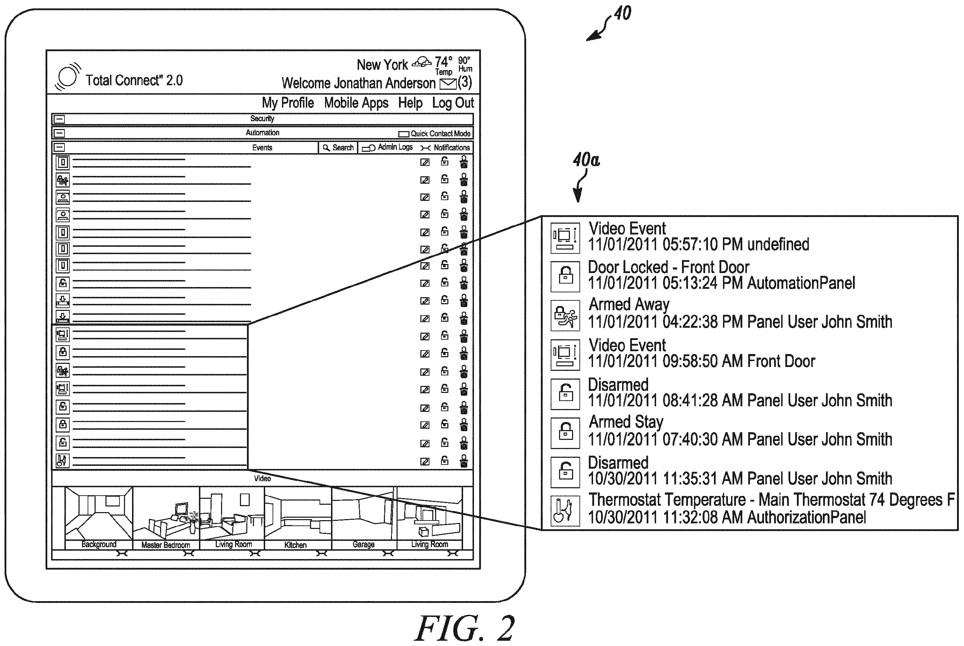

Fig. 2 illustrates an exemplary display 40, with an enlarged section 40a, which might be present on panel 28 for purposes of monitoring the region R. Screen 40 illustrates a series of events, incidents or conditions in the region R which have been noted by the station 14. A user can initiate a process by clicking on or selecting a member of the list on the display 40 using one of the elements 30.

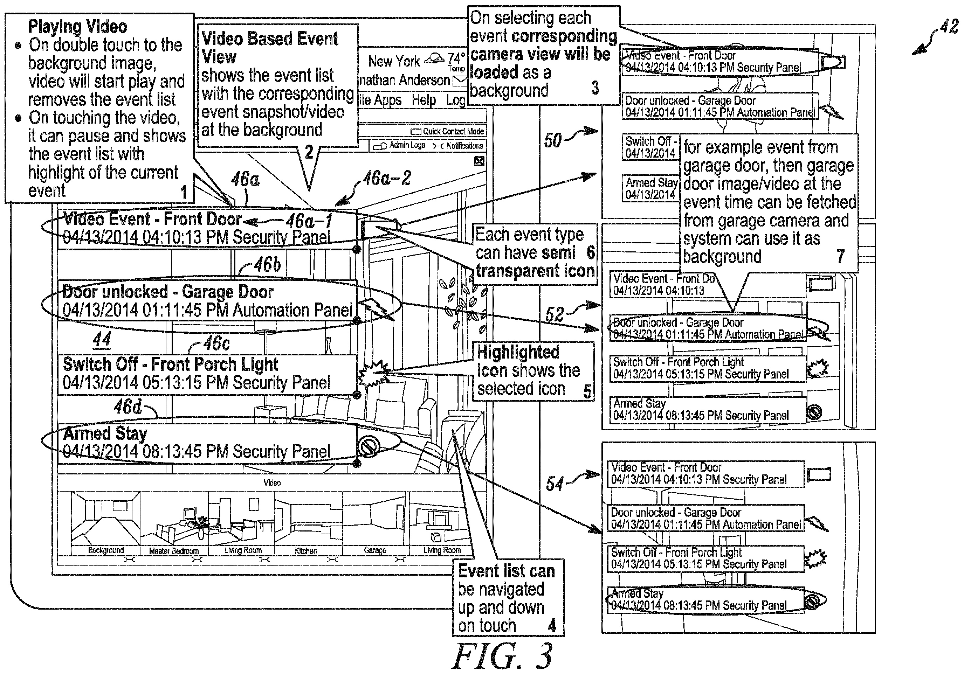

Fig. 3 illustrates an exemplary contextual display 42, responsive to the user's selection on the list of Fig. 2. The user can be local to the station 14 and display 28 or can access the display via a computer network and a mobile device such as device 32.

Advantageously, the display 42, associated with monitoring a residence, is not a mere list which might identify a camera, status or location. Instead the user is presented with a multi-level background contextual display, 44 which is associated with a current event. The background display 44 is overlaid by one or more semi-transparent foreground event identifiers, which include text and associated icons, 46a, b, c, d (from the event list) which represent events, conditions or alarms in the region R.

Each of the event identifiers can include a textual part 46a-1 and an activatable icon 46a-1. Each of the icons 46i can be independently selected for further investigation by the user or system operator. In Fig. 3, where a user selects the icon 46a-2 associated with the video event 46a-1, the background screen switches from background 44 to background 50 and a corresponding set of event identifiers. Selecting other icons in Fig. 3 directs a user to background screens 52, or 54, each of which is presented with overlayed foreground event identifiers of a type discussed above.

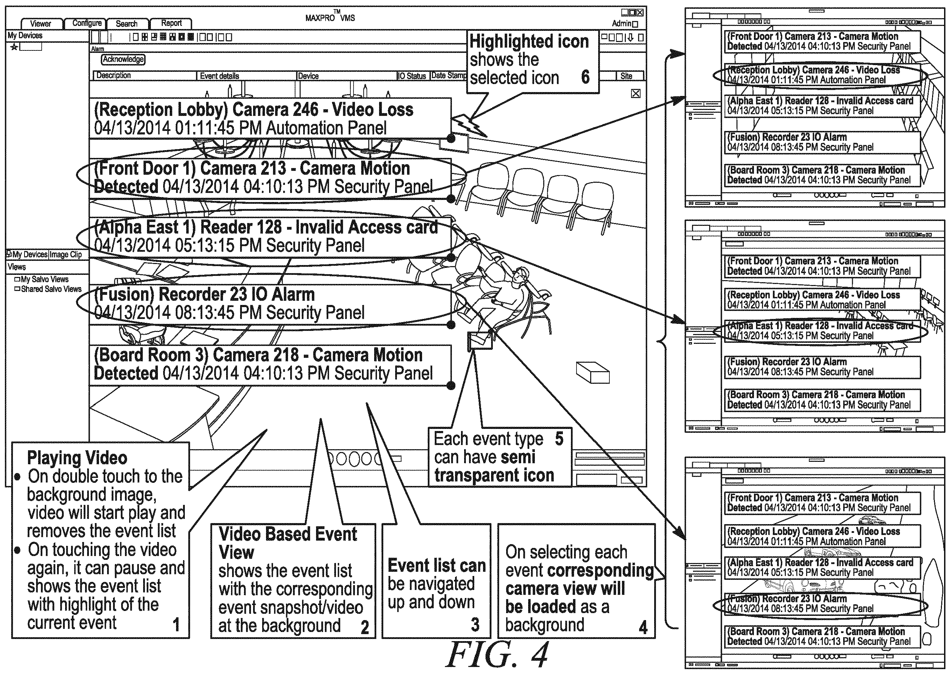

Fig. 4 illustrates a set of background contextual images and associated event identifiers which might be generated for a video surveillance system installed in a commercial establishment, a casino. In each instance, a background contextual screen, or image, is overlaid with semitransparent event identifiers of the type discussed above.

In summary embodiments hereof enhance the user's experiences by reducing time needed to search the video data for intended clips or the like. Instant visual context presenting images are provided to the user while investigating the list of alarms or events. Incident management should be improved due to enhanced and faster understanding of the incident.

Those of skill will understand that it is not necessary that any member of plurality 12 include video-type cameras. Some members of plurality 12 can be non-video ambient condition detectors. In this instance, a pre-stored background image can be displayed with overlying semitransparent event or incident identifiers.

From the foregoing, it will be observed that numerous variations and modifications may be effected without departing from the spirit and scope hereof. It is to be understood that no limitation with respect to the specific apparatus illustrated herein is intended or should be inferred. It is, of course, intended to cover by the appended claims all such modifications as fall within the scope of the claims. Further, logic flows depicted in the figures do not require the particular order shown, or sequential order, to achieve desirable results. Other steps may be provided, or steps may be eliminated, from the described flows, and other components may be add to, or removed from the described embodiments.

## Claims

1. An apparatus comprising:
a plurality of monitoring devices, wherein at least some of the plurality of monitoring devices include video-type cameras (12);
control circuits (20) coupled to the plurality of monitoring devices;
a visual output device (28) coupled to the control circuits;
a manually operable selection element (30) coupled to the control circuits; and
a data base (24) storing a plurality of events and the plurality of monitoring devices,
wherein at least some of the plurality of events are visually presented on the visual output device,
wherein the control circuits, responsive to a selected one of the plurality of events, present a first background contextual image (44) and a plurality of foreground images (46a-46d) associated with the first background contextual image,
wherein the plurality of foreground images are presented on the visual output device and overlay the first background contextual image as semitransparent, selectable event identifiers each of which includes respective (46a-1) text and a respective selectable icon, (46a-2) wherein the visual output device displays a second background contextual (50,52,54) image in response to selection of a first foreground image of the plurality of foreground images through the manually operable selection element, and
wherein each of the first background contextual image and the second background contextual image comprises a respective snapshot image of a respective portion of a monitored region or respective video data from the respective portion of the monitored region.

2. An apparatus as in claim 1 wherein the control circuits present a list of the plurality of events on the visual output device.

3. An apparatus as in claim 2 wherein the control circuits present additional information, relative to the selected one of the plurality of events, on the visual output display.

4. An apparatus as in claim 1 wherein the selected one of the plurality of events comprises a video clip or a singular screen view.

5. An apparatus as in claim 1 wherein the control circuits receive the selection of the first foreground image, and responsive thereto, change from presenting the first background contextual image to presenting the second background contextual image.

6. An apparatus as in claim 1 wherein the plurality of monitoring devices includes ambient condition detectors.

7. A method comprising:
visually presenting an event list; and
responsive to receiving a first selection of an event from the event list, presenting a first background contextual image and presenting a plurality of events from the event list as a plurality of semitransparent foreground event identifiers that overlay the first background contextual image;
responsive to receiving a second selection of a first semitransparent foreground event identifier of the plurality of semitransparent foreground event identifiers, presenting the plurality of events from the event list as the plurality of semitransparent foreground event identifiers that overlay a second background contextual image,
wherein each of the first background contextual image and the second background contextual image comprises a respective snapshot image of a respective portion of a monitored region or respective video data from the respective portion of the monitored region.

8. A method as in claim 7 wherein at least some of the plurality of semitransparent foreground event identifiers include textual information and a selectable icon.

## Patentansprüche

1. Vorrichtung, umfassend:
mehrere Überwachungsvorrichtungen, wobei wenigstens einige der mehreren Überwachungsvorrichtungen Videokameras (12) aufweisen;
Steuerschaltungen (20), die mit den mehreren Überwachungsvorrichtungen verbunden sind;
eine visuelle Ausgabevorrichtung (28), die mit den Steuerschaltungen verbunden ist;
ein manuell bedienbares Auswahlelement (30), das mit den Steuerschaltungen verbunden ist; und
eine Datenbank (24), in der mehrere Ereignisse und die mehreren Überwachungsvorrichtungen gespeichert sind,
wobei wenigstens einige der mehreren Ereignisse auf der visuellen Ausgabevorrichtung visuell dargestellt werden,
wobei die Steuerschaltungen, in Reaktion auf ein ausgewähltes der mehreren Ereignisse, ein erstes kontextabhängiges Hintergrundbild (44) und mehrere Vordergrundbilder (46a-46d), die dem ersten kontextabhängigen Hintergrundbild zugeordnet sind, darstellen,
wobei die mehreren Vordergrundbilder auf der visuellen Ausgabevorrichtung dargestellt werden und dem ersten kontextabhängigen Hintergrundbild in Form halbtransparenter, auswählbarer Ereigniskennzeichner überlagert sind, die jeweils entsprechenden (46a-l) Text und ein entsprechendes auswählbares Symbol (46a-2) aufweisen,
wobei die visuelle Ausgabevorrichtung in Reaktion auf die Auswahl eines ersten Vordergrundbildes der mehreren Vordergrundbilder über das manuell bedienbare Auswahlelement einen zweiten kontextabhängigen Hintergrundbild (50, 52, 54) anzeigt und
wobei sowohl das erste kontextabhängige Hintergrundbild als auch das zweite kontextabhängige Hintergrundbild jeweils ein entsprechendes Schnappschussbild eines jeweiligen Teils eines überwachten Bereichs oder entsprechende Videodaten aus dem betreffenden Teil des überwachten Bereichs umfasst.

2. Vorrichtung nach Anspruch 1, wobei die Steuerschaltungen eine Liste der mehreren Ereignisse auf der visuellen Ausgabevorrichtung darstellen.

3. Vorrichtung nach Anspruch 2, wobei die Steuerschaltungen zusätzliche Informationen zu dem ausgewählten der mehreren Ereignisse auf der visuellen Ausgabevorrichtung darstellen.

4. Vorrichtung nach Anspruch 1, wobei das ausgewählte der mehreren Ereignisse einen Videoclip oder eine einzelne Bildschirmansicht umfasst.

5. Vorrichtung nach Anspruch 1, wobei die Steuerschaltungen die Auswahl des ersten Vordergrundbildes empfangen und in Reaktion darauf von der Darstellung des ersten kontextabhängigen Hintergrundbildes zur Darstellung des zweiten kontextabhängigen Hintergrundbildes wechseln.

6. Vorrichtung nach Anspruch 1, wobei die mehreren Überwachungsvorrichtungen Detektoren für Umgebungsbedingungen aufweisen.

7. Verfahren, umfassend:
visuelles Darstellen einer Ereignisliste; und
in Reaktion auf das Empfangen einer ersten Auswahl eines Ereignisses aus der Ereignisliste, Darstellen eines ersten kontextabhängigen Hintergrundbildes und Darstellen mehrerer Ereignisse aus der Ereignisliste als mehrere halbtransparente Vordergrund-Ereigniskennzeichner, die dem ersten kontextabhängigen Hintergrundbild überlagert sind;
in Reaktion auf das Empfangen einer zweiten Auswahl eines ersten halbtransparenten Vordergrund-Ereigniskennzeichners der mehreren halbtransparenten Vordergrund-Ereigniskennzeichner, Darstellen der mehreren Ereignisse aus der Ereignisliste als die mehreren halbtransparenten Vordergrund-Ereigniskennzeichner, die einem zweiten kontextabhängigen Hintergrundbild überlagert sind,
wobei sowohl das erste kontextabhängige Hintergrundbild als auch das zweite kontextabhängige Hintergrundbild jeweils ein entsprechendes Schnappschussbild eines jeweiligen Teils eines überwachten Bereichs oder entsprechende Videodaten aus dem betreffenden Teil des überwachten Bereichs umfasst.

8. Verfahren nach Anspruch 7, wobei wenigstens einige der mehreren halbtransparenten Vordergrund-Ereigniskennzeichner Textinformationen und ein auswählbares Symbol aufweisen.

## Revendications

1. Appareil comprenant :
une pluralité de dispositifs de surveillance, où au moins une partie de la pluralité de dispositifs de surveillance comprend des caméras vidéo (12) ;
des circuits de contrôle (20) couplés à la pluralité de dispositifs de surveillance ;
un dispositif de sortie visuelle (28) couplé aux circuits de contrôle ;
un élément de sélection à commande manuelle (30) couplé aux circuits de contrôle ; et
une base de données (24) stockant une pluralité d'événements et la pluralité de dispositifs de surveillance,
où au moins une partie de la pluralité d'événements est présentée visuellement sur le dispositif de sortie visuelle,
où les circuits de contrôle, en réponse à un événement sélectionné parmi la pluralité d'événements, présentent une première image contextuelle d'arrière-plan (44) et une pluralité d'images d'avant-plan (46a-46d) associées à la première image contextuelle d'arrière-plan,
où la pluralité d'images d'avant-plan est présentée sur le dispositif de sortie visuelle et recouvre la première image contextuelle d'arrière-plan sous la forme d'identificateurs d'événements sélectionnables, semi-transparents, chacun d'entre eux comprenant texte respectif (46a-1) et une icône sélectionnable respective (46a-2), où le dispositif de sortie visuelle affiche une seconde image contextuelle d'arrière-plan (50, 52, 54) en réponse à la sélection d'une première image d'avant-plan de la pluralité d'images d'avant-plan à travers l'élément de sélection à commande manuelle, et
où chacune de la première image contextuelle d'arrière-plan et de la seconde image contextuelle d'arrière-plan comprend une image instantanée respective d'une partie respective d'une région surveillée ou de données vidéo respectives provenant de la partie respective de la région surveillée.

2. Appareil selon la revendication 1, dans lequel les circuits de contrôle présentent une liste de la pluralité d'événements sur le dispositif de sortie visuelle.

3. Appareil selon la revendication 2, dans lequel les circuits de contrôle présentent des informations supplémentaires, relatives à l'événement sélectionné de la pluralité d'événements, sur l'affichage de sortie visuelle.

4. Appareil selon la revendication 1, dans lequel l'événement sélectionné de la pluralité d'événements comprend une séquence vidéo ou une vue d'écran singulière.

5. Appareil selon la revendication 1, dans lequel les circuits de contrôle reçoivent la sélection de la première image d'avant-plan et, en réponse à celle-ci, passent de la présentation de la première image contextuelle d'arrière-plan à la présentation de la seconde image contextuelle d'arrière-plan.

6. Appareil selon la revendication 1, dans lequel la pluralité de dispositifs de surveillance comprend des détecteurs de conditions ambiantes.

7. Procédé comprenant les étapes suivantes :
présenter visuellement une liste d'événements ; et
en réponse à la réception d'une première sélection d'un événement de la liste d'événements, présenter une première image contextuelle d'arrière-plan et présenter une pluralité d'événements de la liste d'événements sous la forme d'une pluralité d'identificateurs d'événements d'avant-plan semi-transparents qui recouvrent la première image contextuelle d'arrière-plan ;
en réponse à la réception d'une seconde sélection d'un premier identificateur d'événement d'avant-plan semi-transparent de la pluralité d'identificateurs d'événements d'avant-plan semi-transparents, présenter la pluralité d'événements de la liste d'événements sous la forme de la pluralité d'identificateurs d'événements d'avant-plan semi-transparents qui recouvrent une seconde image contextuelle d'arrière-plan,
où chacune de la première image contextuelle d'arrière-plan et de la seconde image contextuelle d'arrière-plan comprend une image instantanée respective d'une partie respective d'une région surveillée ou de données vidéo respectives provenant de la partie respective de la région surveillée.

8. Procédé selon la revendication 7, dans lequel au moins une partie de la pluralité d'identificateurs d'événements d'avant-plan semi-transparents comprend des informations textuelles et une icône sélectionnable.
